Europäisches Patentamt

(19) European Patent Office

Office européen des brevets

(11) Publication number: **0 302 314**
**B1**

## (12) EUROPEAN PATENT SPECIFICATION

(45) Date of publication of the patent specification:
**17.10.90**

(21) Application number: **88111780.8**

(22) Date of filing: **21.07.88**

(51) Int. Cl.⁵: **H01S 3/03**

(54) **Gas bearings for gas lasers.**

(30) Priority: **23.07.87 US 76906**

(43) Date of publication of application:
**08.02.89 Bulletin 89/6**

(45) Publication of the grant of the patent:
**17.10.90 Bulletin 90/42**

(84) Designated Contracting States:
**AT BE CH DE ES FR GB GR IT LI LU NL SE**

(56) References cited:
**EP-A- 0 065 761**
**DE-A- 3 600 124**
**GB-A- 2 135 815**
**GB-A- 2 176 848**
**GB-A- 2 184 595**

(73) Proprietor: **THE SPECTRANETICS CORPORATION,**
**80 Talamine Court, Colorado Springs**
**Colorado 80907(US)**

(72) Inventor: **Murray, Gordon A., 3101 Avenida Olmeda,**
**Carlsbad California 92008(US)**
Inventor: **Derrickson, G. Stephan, 4775 Bunchberry Lane,**
**Colorado Springs Colorado 80918(US)**
Inventor: **Golobic, Robert A., 670 West Woodmen Road,**
**Colorado Springs Colorado 80910(US)**

(74) Representative: **von Bülow, Tam, Dipl.-Ing.,**
**Dipl.-Wirtsch.-Ing. et al, SAMSON & BÜLOW**
**Widenmayerstrasse 5, D-8000 München 22(DE)**

## Description

### BACKGROUND OF THE INVENTION

#### Field of the Invention

The present invention relates to an improved mechanism for circulating gases in a laser. More particularly, the present invention relates to an improved drive coupling and bearing assembly for a circulation fan in a long-life excimer type laser.

#### Description of the Prior Art

Transverse electric (atmospheric) discharge lasers, or TE (A) lasers, have an electric discharge transverse to the lasing optical axis. Transverse electric lasers may operate in a pulse mode, with the laser pulse length generally depending upon the type of active laser gas that is used therein. Many types of different gases, for example carbon dioxide, may be used in such lasers, the wave length of the laser output depending upon the type of gas that is being used.

In order to operate these types of lasers at more than a few pulses per second, the laser gas that is being used must be circulated through the discharge region in order to disperse the heat and molecular by-products that are produced by the laser. In the past, rotary fans or axial compressors have been used to circulate the gas, allowing the lasers to operate up to about 1,000 pulses per second. Conventional rotary mechanical bearings have been used to support the fans or compressors of such prior art devices, as may be seen in U.S. Patent No. 4,099,143 to Foster.

However, conventional bearings have several problems when used in transverse electric discharge lasers, which limit the useful life of the laser. These problems are concerned with the interaction between the bearings and the active laser gas, and with the vacuum "processing" of the laser in its final stage of manufacture.

Generally, the final manufacturing step for sealed lasers, as with light bulbs or television picture tubes and other long-life products, involves a high temperature vacuum bake out. This procedure ensures that contaminants are removed from the walls of the containment vessel, and that the long term makeup of the laser gas will not be altered by contaminants that had previously been adsorbed by the walls of the containment vessel. In this way, the useful life of the laser may be extended by factors of hundreds.

However, when conventional lubricated ball bearings are used to support the circulation fan in the long-life laser, the laser assembly cannot practically be subjected to the high temperature baking out process during manufacture, since the lubricating fluid in the bearings will be burned off during the baking process, contaminating the internal surfaces of the laser. Moreover, the bearings will be left without any lubrication and will quickly seize during operation of the circulating fan.

Clearly, there is a long and unfilled need in the prior art for a bearing that can be used in a long-life laser assembly that can be subjected to the bake out process without damage and without contaminating the laser gas.

A similar problem exists in transmitting mechanical energy to the circulation fan in a sealed laser assembly. In the prior art, the drive shaft was commonly extended through an opening in the laser housing for connection with the fan or compressor, as may be seen in U.S. Patent Nos. 4,571,730 to Mizoguchi et al, 4,624,001 to Gurs, 4,627,061 to McLeod et al, 3,735,284 to Hill and 3.302,127 to Lin.

Lin Discloses the use of nylon material and O-rings with the bearing at the point a shaft passes through the housing wall. Mizoguchi et al teach the use of a magnetic fluid seal. In order to seal the opening, conventional sealing joints such as that disclosed in Mizoguchi et al were used. However, the sealing joints needed lubrication, and such joints commonly used polymeric gaskets in order to prevent mixing of outside layer air with the laser gases. This further reduced the shelf life of the laser, since those materials can not withstand the high temperatures in vacuum that are used in the baking out process without contaminating the inside of the sealed laser assembly.

Another prior art arrangement for driving the fan is illustrated in U.S. Patent 4,099,143 to Foster. A drive motor is included within the housing, and is thus subjected to the high temperatures and caustic gasses within the housing. In addition, it is doubtful whether such a drive motor could survive the high temperature vacuum bake out process without sustaining damage.

Clearly, a coupling arrangement is needed that can survive the baking out process, and will not contaminate the inside of the laser prior to its use.

DE-A 3 600 124 discloses gas bearings in a radial compressor for a high power gas transport laser.

### SUMMARY OF THE INVENTION

An object of the present invention as claimed in claim 1 is to provide a bearing for a recirculation fan in a long-life gas discharge laser that can survive the baking out process without contaminating the laser gas.

A further object of an embodiment of the present invention is to provide a coupling arrangement whereby mechanical energy can be transferred from the exterior of the laser assembly to the recirculation fan, without compromising the sealing of the laser, and which can survive the baking out process without contaminating the laser gas.

The foregoing objectives are achieved by the provision of first and second gas bearings for supporting the circulation fan on a cushion of compressed gas, and by a magnetic coupling assembly for coupling the fan to an external drive shaft without penetrating the walls of the sealed laser assembly. The gas bearings run on the active laser gas itself, and require no lubrication except for the laser gas, and can thus be baked at very high temperatures to remove contamination from the laser, without sustaining any damage.

Since these bearings can survive the baking out process, it is anticipated that a laser constructed according to the present invention will be able to operate for more than one hundred million pulses, and have a shelf life of one year. The gas bearings further increase the life time of the laser because the bearings themselves exhibit much less wear than a conventional lubricated bearing, because there is only one moving part and no mechanical contact between the rotary and stationary parts.

Moreover, the gas bearings allow the fan to circulate at greater speeds for a given power input, because of the decreased resistance of the bearings, this permitting greater gas circulation.

In addition, the gas bearings suffer no degradation in performance after being used, returned to exposure to atmospheric air, and subsequently being sealed in the laser gas. Many prior art lubricated bearings would seize up after such a duty cycle, or show much more rapid wear due to corrosion of the metallic bearing surfaces.

Power to the circulating fan is delivered by means of a magnetic coupling through the laser body. The magnetic coupling of the present invention includes a driving magnet that is driven by an exterior power source and is positioned adjacent to the interior of the laser housing opposite the driven magnet. The use of a magnetic coupling eliminates the need for a rotating seal to transmit power to the circulating fan. The attractive force of the magnets is balanced by the gas bearing assembly. The gas bearing design provides for gas pressure within the bearing in an axial direction opposing the magnetic attraction. The driven magnet coupler is thus supported displaced from the laser housing free to rotate. The gas bearing provides, not only radial support for the shaft of the fan, but axial support for the magnetic coupling as well. Since no seals and no lubricants other than the laser gas are used throughout, the coupling may be used in conjunction with the baking out process, permitting a longer useful life for the laser.

Other objects, features and advantages of the present invention will become more apparent in the light of the following detailed descriptions of preferred embodiments thereof as illustrated in the accompanying drawings, wherein like reference numerals designate corresponding structure.

## BRIEF DESCRIPTION OF THE DRAWINGS

FIGURE 1 is a schematic side plan view of a long-life laser assembly constructed according to the present invention;

FIGURE 2 is a schematic cross sectional view taken along lines 2-2 in FIGURE 1;

FIGURE 3 is a sectional view through a long-life laser recirculation fan coupling and support assembly constructed according to the present invention;

FIGURE 4 is a cross sectional view taken along lines 4-4 in FIGURE 3; and

FIGURE 5 is a cross sectional view taken along lines 5-5 in FIGURE 3.

## DETAILED DESCRIPTION OF THE PREFERRED EMBODIMENT

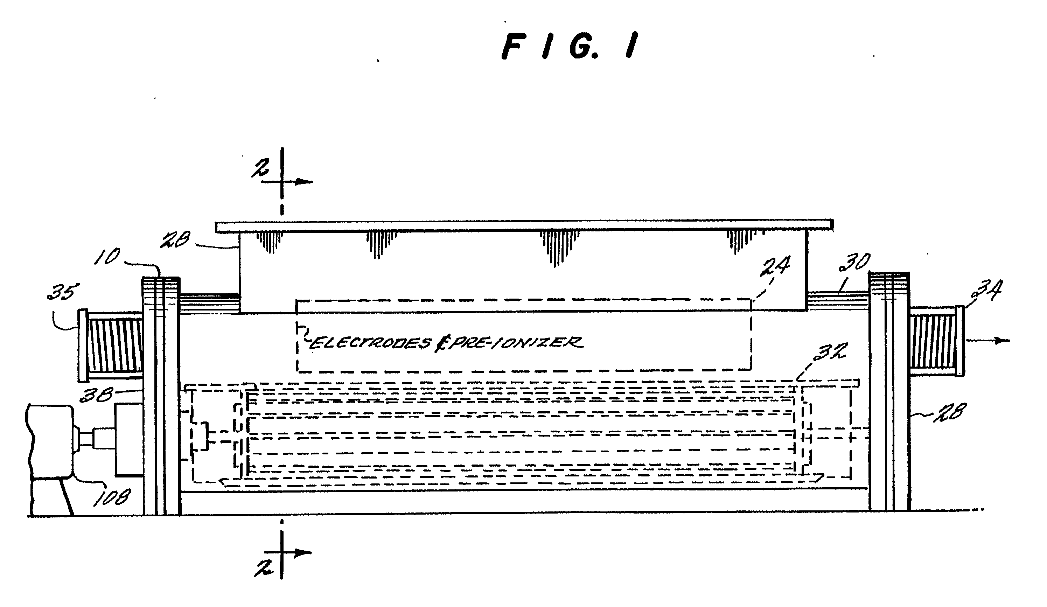

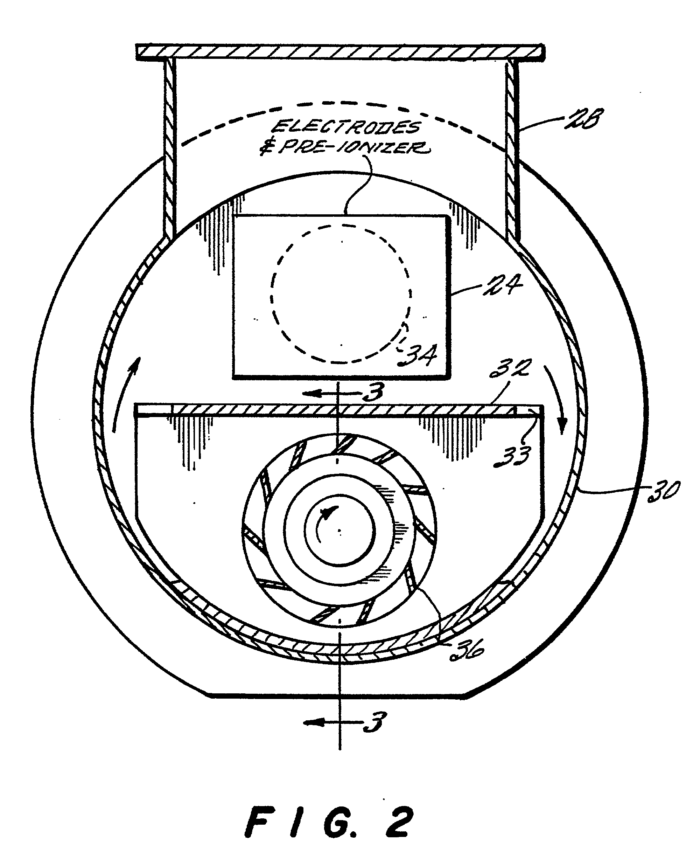

Referring now to the drawings, FIGURES 1 and 2 illustrate a long-life excimer laser system constructed according to the present invention. Laser 10 is separated into an upper housing 28 and a lower housing 30. Located in housings 28 and 30 are electrodes and a means of pre-ionization 24 arranged in a conventional manner well known to those skilled in the art. The upper housing provides for insulation between the upper electrode and lower electrode. The upper housing also provides feed-throughs and insulation for the pre-ionizers. Ceramic insulation is used in lieu of plastic so as to be bakeable and not react with the laser gas.

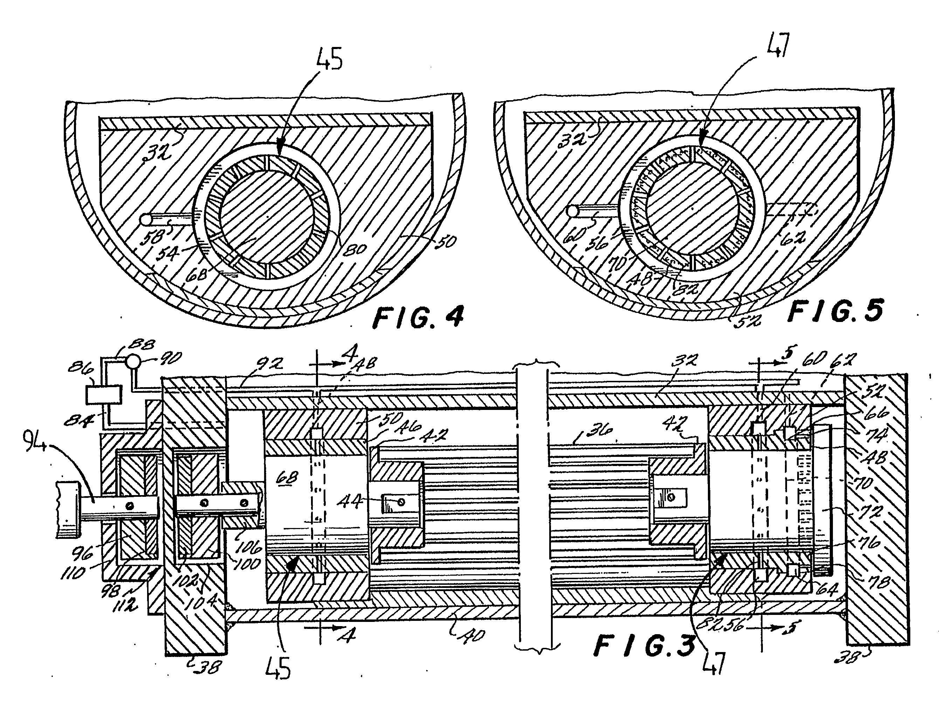

In order to circulate the gas in the region of electrode assembly 24, a squirrel cage the gas circulation fan 36 is provided within lower housing 30. Squirrel cage fan 36 is supported for rotation within the plenum chamber housing by a pair of bearings 45, 47 which are supported by first and second bulkheads 50, 52, respectively, which are connected to a connecting plate (see Figure 3) 32.

First bearing 45 is designed as a radial support bearing. Second bearing 47 is designed as both a radial support bearing and an axial thrust bearing, as will be subsequently described.

Each of first and second bearings 45, 47 have an outer bearing sleeve member 46, 48 and a journal member 68, 70, respectively, mounted for rotation therein (see Figures 4 and 5). Journal members 68, 70 are designed to have an outer diameter that is slightly less than the inner diameter of outer sleeves 46, 48 so that journal members 68, 70 can be separated from the outer sleeves by a thin cushion of compressed gas that is supplied therebetween.

In order to provide the thin cushion of compressed gas on which the journal members 68, 70 ride, gas from housings 28 and 30 is sucked into a passage 84 past a filter 86 through an additional passage 88 into a compressor 90. Compressor 90 then pumps the gas at an increased pressure into a passage 92 that connects to a first conduit 58 in first bulk head 50, a second conduit 60 in second bulk head 52 and a third conduit 62 in second bulk head 52.

As shown in Figure 4, first conduit 58 connects with an annular recess 54 in first bulkhead 50. Annular recess 54 in turn communicates with a plurality of radially extending air hole bores 80 in first bearing 46. Similarly, second conduit 60 connects with an annular recess 56 in second bulk head 52, which in turn communicates with a plurality of radially extending air hole bores 82 in second bearing 48.

In this way, pressurized gas from the compressor 90 is forced between first sleeve 46 and first journal 68, and between second sleeve 48 and second journal 70, so that the journals ride frictionlessly on a thin cushion of compressed gas.

Mechanical energy is supplied to the squirrel cage fan 36 by a drive shaft 94 that is connected to an external drive motor 108, as shown in Figure 1. As illustrated in Figure 3, the energy from shaft 94 is transferred to the squirrel cage fan 36 by a magnetic coupler arrangement 112. The magnetic coupler arrangement consists of a drive magnet holder 96 that is connected to the drive shaft 94 and holds a drive magnet 98 therein. The drive magnet holder 96 is kept positioned adjacent the exterior of one of end flanges 38 of the plenum chamber housing 30 by a drive magnet retainer member 110.

Driven magnet holder 100 with a driven magnet 102 mounted therein is positioned opposite the driving magnet 98 in a recess 104 that is provided in the inner surface of end flange 38.

Driven magnet holder 100 is in turn coupled to an extension 106 of journal 68. Jigs 42 are connected to opposite ends of fan 36 and are in turn coupled to journals 68 and 70 by set screws 44. Jigs 42 do not extend across the squirrel cage fan 36. In this way, squirrel cage fan 36 remains flexible, allowing the bearings to be self-aligning.

In order to keep driven magnet 102 from bearing against end flange 38 of the plenum chamber housing 30, means are provided for frictionlessly spacing the driven magnet from end flange 38. In the preferred embodiment, second journal member 70 is provided with an outwardly extending flange portion 72, as shown in FIGURE 3. Gas supplied from compressor 90 is introduced into an annular chamber formed by a second annular recess 64 in second bulkhead 52 and an aligned annular recess 66 in second bearing 70. The gas is then expelled through a plurality of axially extending air hole bores 74 in second bearing 48, so as to create a thin cushion of compressed gas between end surface 76 of the second bearing and inner surface 78 of the flange portion 72 of second journal 70, as shown in FIGURE 3. In this way, a spacing is maintained between the wall of end flange 38 of the plenum chamber housing and driven magnet 102.

A sealed laser assembly according to the present invention is constructed as follows. The housing is first placed in a vacuum and baked at a temperature of approximately 350° Celsius in order to remove any impurities previously adsorbed by the walls of the housing. The housing is then sealed, and filled with the desired mixture of laser gas. A suitable source of electric potential is then added.

The operation of a long-life laser constructed according to the present invention will now be described, particularly in regard to a xenon chloride type excimer laser, which produces a laser beam at 308 nanometers. After assembly of the laser unit, a mixture of 5 gases is introduced into housings 28 and 30, specifically approximately 65.8 percent neon, 31.6 percent helium, 2.4 percent xenon, 0.2 percent hydrogen chloride and a trace of hydrogen. Laser 10 is filled with the gas mixture to an absolute pressure of 2100 torr. A power supply then charges capacitors, which are connected to electrodes and pre-ionizers 24. The capacitors are discharged in a manner well known in the art to ionize the gas, dissociating the hydrogen chloride and ionizing the neon and helium.

The high pressure and high temperature conditions created in the discharge along with the dissociation and ionization cause a unique molecule, xenon chloride, to form for an extremely short period. This molecule only exists in the excited state; it is a polymer of two atoms, in other words a dimer, hence the contraction excimer, which stands for "excited dimer". This molecule then emits radiation at a wave length of 308 nanometers.

The emitted radiation then builds in intensity in the direction of the electrode axes by being continuously reflected (resonating) between mirror 35 and output coupler 34 that is shown in FIGURES 1 and 2. A pulse of laser energy is eventually emitted through output coupler 34.

After the xenon chloride molecule has emitted radiation, it returns to the ground state, quickly dissociates, reforming hydrogen chloride. The trace amount of hydrogen present in the mixture results in an excess of hydrogen, thereby promoting the recombination of hydrogen chloride and minimizing the formation of the chlorine molecule. Chlorine molecules are undesirable because they absorb radiation at 308 nanometers, thereby reducing the efficiency of the laser.

In order to dilute unwanted chlorine molecules that are formed during the discharge process, and to dissipate unwanted heat, the squirrel cage fan is caused to be turned by applying power to drive motor 108 during the laser operation. This causes gas to be circulated in housings 28 and 30 and through passages 33 (see Figure 2) which are defined between platform 32 and housing 30. At this time, laser gas is forced between the outer bearing sleeves 46, 48 and the journals rotatably mounted therein. The journals members and squirrel cage fan thus ride frictionlessly on a cushion of laser gas.

At the same time, particulate matter that is generated by degradation of the electrodes and pre-ionizers during the discharge process are filtered out from the laser gas by filter 86 in the compressor circuit. The shelf life and efficiency of the laser is thus further extended.

While the invention has been particularly shown and described with reference to the illustrated embodiment, it should be understood that various changes in the form, detail and application of the present invention may be made by those skilled in the art. For example, journal member 68 may include a thrust bearing also, so as to be identical to journal member 70. Also, jig 42 can be eliminated when fan 36 is directly coupled to journal members 68 and 70.

## Claims

1. A long-life transverse electric discharge laser assembly (10) comprising: a housing (28, 30) for containing an excimer laser gas; means (24) for electrically exciting said laser gas within said housing (28, 30); means (36) for circulating the laser gas within said housing (28, 30), characterized by gas bearings (45, 47) including means (46, 48, 68, 70) for supporting said circulating means (36) on a cushion of laser gas to reduce friction and to allow baking of said housing (28, 30) at high temperatures, which baking enables the laser (10) to operate for extended periods.

2. Apparatus according to claim 1, wherein said gas bearings comprise first and second gas bearings (45, 47) for supporting said circulation means (36) for rotation in said housing (30), and means (84, 86, 88, 90, 92) for supplying compressed laser gas to said first and second gas bearings (45, 47).

3. Apparatus according to claim 2, wherein said supplying means comprises a first passage (84); a filter member (86) disposed in said first passage (84), a compressor (90) for drawing gas from said housing (30) through said first passage (84) and said filter (86) and a second passage (92) for transporting the gas to said first and second gas bearings (45, 47).

4. Apparatus according to claim 3, further comprising first and second journal members (68, 70) integrally connected with said circulating means (36) and mounted for rotation within said first and second gas bearing means (45, 47), respectively; a platform (32) mounted within said housing (30); first and second bulkhead means (50, 52) suspended from said platform (32) for supporting said first and second gas bearings (45, 47), said first and second bulkhead means (50, 52) having annular recesses (54, 56) defined therein communicating with said second passage (60), said first and second gas bearings (45, 47) each having a plurality of radially extending air hole bores (80, 82) defined therein for communicating with said annular recesses (54, 56) in said first and second bulkhead means (50, 52), respectively, whereby a cushion of gas from said supplying means (84, 86, 88, 90, 92) may be provided between said gas bearings (45, 47) and said journals (68, 70), respectively.

5. Apparatus according to at least one of the claims 1–4, wherein said circulating means (36) is a squirrel-cage type fan.

6. Apparatus according to at least one of the claims 1–5, characterized by means (112) for coupling said circulating means (36) to a source of mechanical power (108) external to said housing (30) without breaching said housing (30).

7. Apparatus according to claim 6, wherein said coupling means (112) comprises: a driving magnet (98) positioned adjacent an outer surface of said housing (30) and connected to the external source of mechanical power (108); and a driven magnet (102) positioned adjacent an inner surface of said housing (30) opposite said driving magnet (98) and connected to said circulating means (36).

8. Apparatus according to claim 7, wherein said supporting means includes first and second gas bearings (45, 47) for supporting said circulating means (36), and means for supplying compressed laser gas to said first and second laser gas bearings (45, 47), whereby said circulating means (36) turns on a cushion of compressed gas.

9. Apparatus according to claim 8, further comprising means for spacing said driven magnet (102) from said inner surface of said housing (30).

10. Apparatus according to claim 9, wherein at least one of said gas bearings (45, 47) is a thrust bearing including an outer sleeve portion (48) and an inner journal portion (70) having a flange (72) at one end thereof, said journal portion (70) being connected with said driven magnet (102), and wherein said spacing means comprise second means for supplying compressed laser gas between an end surface (76) of said sleeve portion (48) and an inner surface (78) of said flange portion (72), whereby said inner surface (78) and said end surface (76) are separated by a cushion of gas.

11. Apparatus according to at least one of the claims 6–10, wherein said supplying means comprises a first passage (84, 88), a compressor (90) for drawing gas from said housing (30) through said first passage (84, 88), a second passage (60, 92) for transporting the gas to said first and second gas bearings (45, 47) and a filter member (86) disposed in one of said first and second passages (84, 88; 92).

12. Apparatus according to claim 11, wherein said first and second bearings (45, 47) comprise: first and second outer sleeve portions (46, 48), respectively;

first and second journal members (68, 70) connected with said circulating means (36) and mounted for rotation within said first and second sleeve portions (46, 48), respectively; a platform (32) mounted within said housing (30); first bulkhead means (50) suspended from said platform (32) for supporting said first gas bearing (45); and second bulkhead means (52) suspended from said platform (32) for supporting said second gas bearing (47), said first and second bulkhead means (50, 52) having annular recesses (54, 56) defined therein communicating with said second passage (60), said first and second outer sleeves (46, 48) each having a plurality of radially extending airhole bores (80, 82) defined therein for communicating with said annular recesses (54, 56) in said first and second bulkhead means (50, 52), respectively, whereby a cushion of gas from said supplying means is provided between said outer sleeves (46, 48) and said journal members (68, 70), respectively.

13. A method of manufacturing a long-life transverse electric discharge laser assembly (10) comprising:

a) providing a sealable housing having (28, 30) electrodes, a mirror assembly (35), a laser gas circulation fan (36) and a plurality of gas bearings (45, 47) for supporting the circulation fan (36) therein;

b) evacuating the air out of said housing (28, 30);

c) baking the housing (28, 30) to remove contaminants form the walls thereof;

d) filling said housing (28, 30) with a selected excimer laser gas;

e) sealing said housing (28, 30) with the gas therein; and

f) supporting the laser gas circulation fan (36) for rotation on a cushion of laser gas.

14. A method according to claim 13, wherein step (a) further includes providing one half of a magnetic coupler (100, 102) in said housing (30) for coupling said circulation fan to an external source (108) of mechanical energy.

**Patentansprüche**

1. Langlebige Querstrom-Laservorrichtung (10) mit einem Gehäuse (28, 30) zur Aufnahme eines excimeren Lasergases, Einrichtungen (24) zum elektrischen Anregen des Lasergases innerhalb des Gehäuses (28, 30), Einrichtungen (36) zum Zirkulieren des Lasergases innerhalb des Gehäuses (28, 30), gekennzeichnet durch Gaslager (45, 47), die Einrichtungen (46, 48, 68, 70) zum Tragen der Zirkuliereinrichtungen (36) auf einem Kissen aus Lasergas aufweisen, um die Reibung zu reduzieren und ein Ausbacken des Gehäuses (28, 30) bei hohen Temperaturen zu erlauben, wobei das Ausbacken dem Laser (10) erlaubt, über längere Zeiträume hinweg betrieben zu werden.

2. Vorrichtung nach Anspruch 1, dadurch gekennzeichnet, daß die Gaslager erste und zweite Gaslager (45, 47) zum Tragen der Zirkuliereinrichtungen (36) zur Drehung in dem Gehäuse (30) umfassen, sowie Einrichtungen (84, 86, 88, 90, 92), mit denen die ersten und zweiten Gaslager (45, 47) mit unter Druck stehendem Lasergas versorgt werden.

3. Vorrichtung nach Anspruch 2, dadurch gekennzeichnet, daß die Versorgungseinrichtungen einen ersten Druchgang (84), ein in dem ersten Durchgang (84) angeordnetes Filterteil (86), einen Kompressor (90), um Gas durch den ersten Durchgang (84) und den Filter (86) aus dem Gehäuse (30) abzuziehen, sowie einen zweiten Durchgang (92) umfassen, über den das Gas zu dem ersten und zweiten Gaslager (45, 47) transportiert wird.

4. Vorrichtung nach Anspruch 3, gekennzeichnet durch erste und zweite Lagerzapfen (68, 70), die integral mit der Zirkuliereinrichtung (36) verbunden sind und zwecks Drehung innerhalb der ersten bzw. zweiten Gaslagereinrichtungen (45, 47) montiert sind, eine innerhalb des Gehäuses (30) montierte Plattform (32), erste und zweite Zwischenwandeinrichtungen (50, 52), die an der Plattform (32) hängend die ersten und zweiten Gaslager (45, 47) tragen, wobei die ersten und zweiten Zwischenwandeinrichtungen (50, 52) sie begrenzende, ringförmige Ausnehmungen (54, 56) aufweisen, die mit dem zweiten Durchgang (60) in Verbindung stehen, die ersten und zweiten Gaslager (45, 47) jeweils eine Mehrzahl radial sich erstreckender, diese begrenzende Luftlochbohrungen (80, 82) aufweisen, die mit den ringförmigen Ausnehmungen (54, 56) in den ersten und zweiten Zwischenwandeinrichtungen (50, 52) in Verbindung stehen und ein Kissen aus Gas von den Versorgungseinrichtungen (84, 86, 88, 90, 92) zwischen die Gaslager (45, 47) bzw. die Zapfen (68, 70) geleitet werden kann.

5. Vorrichtung nach wenigstens einem der Ansprüche 1 bis 4, dadurch gekennzeichnet, daß die Zirkuliereinrichtung (36) ein stiftkorbartiger Ventilator ist.

6. Vorrichtung nach wenigstens einem der Ansprüche 1 bis 5, gekennzeichnet durch Einrichtungen (112) zum Ankoppeln der Zirkuliereinrichtung (36) an eine außerhalb des Gehäuses (30) angeordnete mechanische Energiequelle, ohne daß das Gehäuse (30) durchbrochen ist.

7. Vorrichtung nach Anspruch 6, dadurch gekennzeichnet, daß die Kupplungseinrichtung (112) umfaßt: einen Antriebsmagneten (98), der an eine Außenfläche des Gehäuses (30) angrenzend angeordnet und mit der außenliegenden mechanischen Energiequelle (108) verbunden ist, sowie einen angetriebenen Magneten (102), der an einer Innenfläche des Gehäuses (30) angrenzend, dem Antriebsmagneten (98) gegenüberliegend angeordnet und mit der Zirkuliereinrichtung (36) verbunden ist.

8. Vorrichtung nach Anspruch 7, dadurch gekennzeichnet, daß die Trageeinrichtung erste und zweite Gaslager (45, 47) zum Tragen der Zirkuliereinrichtung (36) aufweist sowie Einrichtungen zur Lieferung von unter Druck stehendem Lasergas an erste und zweite Lasergaslager (45, 47), wobei sich die Zirkuliereinrichtung (36) auf einem Kissen unter Druck stehenden Gases dreht.

9. Vorrichtung nach Anspruch 8, gekennzeichnet durch Einrichtungen zur Beabstandung des angetriebenen Magneten (102) von der Innenfläche des Gehäuses (30).

10. Vorrichtung nach Anspruch 9, dadurch gekennzeichnet, daß wenigstens eines der Gaslager (45, 47) ein Längslager mit einem äußeren Hülsenabschnitt (48) und einem inneren Zapfenabschnitt (70) ist, der an seinem einen Ende einen Flansch (72) aufweist, wobei der Zapfenabschnitt (70) mit dem angetriebenen Magneten (102) verbunden ist, und die Beabstandungseinrichtungen zweite Einrichtungen umfassen, mit denen unter Druck stehendes Lasergas zwischen eine Endfläche (76) des Hülsenabschnittes (48) und eine innere Fläche (78) des Flanschabschnittes (72) geliefert wird und die innere Fläche (78) und die Endfläche (76) durch ein Gaskissen voneinander getrennt sind.

11. Vorrichtung nach wenigstens einem der Ansprüche 6 bis 10, dadurch gekennzeichnet, daß die Versorgungseinrichtung einen ersten Durchgang (84, 88), einen Kompressor (90) zum Abziehen von Gas aus dem Gehäuse (30) durch den ersten Durchgang (84, 88), einen zweiten Durchgang (60, 92) zum Befördern des Gases zu den ersten und zweiten Gaslagern (45, 47), sowie ein in einem der ersten oder zweiten Durchgänge (84, 88: 92) angeordnetes Filterteil (86) aufweist.

12. Vorrichtung nach Anspruch 11, dadurch gekennzeichnet, daß die ersten und zweiten Lager (45, 47) umfassen: erste bzw. zweite äußere Hülsenabschnitte (46, 48); erste und zweite Zapfenteile (68, 70), die mit der Zirkuliereinrichtung (36) verbunden und zur Drehung innerhalb des ersten bzw. zweiten Hülsenabschnittes (46, 48) montiert sind; eine Plattform (32), die innerhalb des Gehäuses (30) montiert ist; erste Zwischenwandeinrichtungen (50), die an der Plattform (32) zum Tragen des ersten Gaslagers (45) aufgehängt sind; und zweite Zwischenwandeinrichtungen (52), die zum Tragen des zweiten Gaslagers (47) an der Plattform (32) aufgehängt sind, wobei die ersten und zweiten Zwischenwandeinrichtungen (50, 52) sie begrenzende ringförmige Ausnehmungen (54, 56) aufweisen, die mit dem zweiten Durchgang (60) in Verbindung stehen, wobei die ersten und zweiten äußeren Hülsen (46, 48) jeweils eine Mehrzahl sich radial erstreckende, sie begrenzende Luftlochbohrungen (80, 82) zur Verbindung mit den ringförmigen Ausnehmungen (54, 56) in den ersten bzw. zweiten Zwischenwandeinrichtungen aufweisen, und wobei ein Gaskissen von der Versorgungseinrichtung zwischen die äußere Hülse (46, 48) bzw. die Zapfenteile (68, 70) geliefert wird.

13. Verfahren zur Herstellung einer langlebigen Querstrom-Laservorrichtung (10), das umfaßt:
a) Vorsehen eines abdichtbaren Gehäuses (28, 30), das Elektroden, eine Spiegelanordnung (35), einen Lasergaszirkulationsventilator (36) und eine Mehrzahl Gaslager (45, 47) zum Tragen des Zirkulationsventilators (36) darin aufweist,
b) Auspumpen der Luft aus dem Gehäuse (28, 30),
c) Ausbacken des Gehäuses (28, 30), um Verunreinigungen seiner Wände zu entfernen,
d) Füllen des Gehäuses (28, 30) mit einem ausgewählten, excimeren Lasergas, e) Verschließen des Gehäuses (28, 30) mit dem darin befindlichen Gas und
f) Unterstützen des Lasergaszirkulationsventilators (36) durch Drehung auf einem Kissen aus Lasergas.

14. Verfahren nach Anspruch 13, dadurch gekennzeichnet, daß der Verfahrensschritt (a) zusätzlich den Schritt umfaßt, das Gehäuse (30) mit einer Hälfte einer magnetischen Kupplung (100, 102) zu versehen, um den Zirkulationsventilator an eine äußere Quelle (108) mechanischer Energie anzukoppeln.

**Revendications**

1. Ensemble laser (10) de grande longévité à décharge électrique transversale, comprenant: une enveloppe (28, 30) destinée à renfermer un gaz laser excimère, un moyen (24) pour l'excitation électrique dudit gaz laser dans ladite enveloppe (28, 30), un moyen (36) pour la circulation du gaz laser à l'intérieur de ladite enveloppe (28, 30), caractérisé par des paliers à gaz (45, 47) comprenant des moyens (46, 48, 68, 70) de support dedit moyen de circulation (36) sur un coussin de gaz laser pour diminuer les frottements et pour permettre la cuisson au four de ladite enveloppe (28, 30) à des températures élevées, cette cuisson rendant le laser (10) apte à travailler pendant de longues périodes.

2. Appareil selon la revendication 1, dans lequel lesdits paliers à gaz constituent des premier et deuxième paliers à gaz (45, 46) pour supporter lesdit moyens de circulation (36) en vue de leur rotation dans ladite enveloppe (30) et des moyens (84, 86, 88, 90, 92) pour alimenter en gaz laser comprimé lesdits premier et deuxième paliers à gaz (45, 47).

3. Appareil selon la revendication 2, dans lequel lesdits moyens d'alimentation comprennent: un premier passage (84); un filtre (86) disposé dans ledit premier passage (84); un compresseur (90) pour extraire du gaz de ladite enveloppe (30) à travers ledit premier passage (84) et ledit filtre (86); et un deuxième passage (92) pour transporter le gaz jusqu'auxdits premier et deuxième paliers à gaz (45, 47).

4. Appareil selon la revendication 3, comprenant en outre des premier et deuxième tourillons (68, 70), faisant corps avec ledit moyen de circulation (36) et montés pour pouvoir tourner à l'intérieur respectivement des premier et deuxième paliers à gaz (45, 47); une plateforme (32) montée à l'intérieur de ladite enveloppe (30); des première et deuxième cloisons étanches (50, 52), suspendues à ladite plateforme (32) pour supporter lesdits premier et deuxième paliers à gaz (45, 47), lesdites première et deuxième cloisons étanches (50, 52) ayant des cavités annulaires (54, 56) qui y sont formées et qui communiquent avec ledit deuxième passage (60), lesdits premier et deuxième paliers à gaz (45, 47) ayant chacun une pluralité de trous d'échappement (80, 82) qui s'étendent radialement et qui sont formés dans ces paliers pour communiquer respectivement avec lesdites cavités annulaires (54, 56) des première et deuxième cloisons étanches (50, 42), un coussin de gaz provenant desdits moyens d'alimentation (84, 86, 88, 90, 92) pouvant être prévu entre respectivement lesdits paliers à gaz (45, 47) et lesdits tourillons (68, 70).

5. Appareil selon l'une au moins des revendications 1–4, dans lequel le dit moyen de circulation (36) est un ventilateur du type à cage d'écureuil.

6. Appareil selon l'une au moins des revendications 1–5, caractérisé par un mcyen de couplage (112) pour coupler lesdits moyens de circulation (36) à une source d'énergie mécanique (108), extérieure à ladite enveloppe (30), sans trou dans ladite enveloppe (30).

7. Appareil selon la revendication 6, dans lequel ledit moyen de couplage (112) comprend: un aimant d'entraînement (98) contigu à la surface extérieure de ladite enveloppe (30) et relié à la source extérieure d'énergie mécanique (108); et un aimant entraîné (102) contigu à la surface intérieure de ladite enveloppe (30) en face dudit aimant d'entraînement (98) et relié au dit moyen de circulation (36).

8. Appareil selon la revendication 7, dans lequel lesdits moyens de support comprennent des premier t deuxième paliers à gaz (45, 47) pour supporter ledit moyen de circulation (36) et des moyens d'alimentation pour alimenter en gaz laser comprimé lesdits premier et euxième paliers (45, 47) à gaz laser, ledit moyen de circulation (36) tournant sur un coussin de gaz comprimé .

9. Appareil selon la revendication 8, comprenant n outre des moyens pour espacer ledit aimant entraîné 102) de ladite surface intérieure de ladite enveloppe 30).

10. Appareil selon la revendication 9, dans lequel l'un au moins desdits paliers à gaz (45, 47) est un palier de butée comprenant une partie bague extérieure (48) et une partie tourillon interieur (70) ayant une joue (72) à l'une de ses extrémités, ladite partie tourillon (70) étant reliée audit aimant entraîné (102) et dans lequel lesdits moyens d'espacement comprennent pour une alimentation en gaz laser comprimé entre une surface d'extrémité (76) de ladite partie bague (48) et une surface intérieure (78) de ladite partie joue (72), ladite surface intérieure (78) et la dite surface d'extrémité (76) étant séparées par un coussin de gaz .

11. Appareil selon au moins l'une des revendications 6–10, dans lequel lesdit moyens d'alimentation comprennent un premier passage (84, 88), un compresseur (90) pour extraire du gaz de ladite enveloppe (30) à travers ledit premier passage (84 , 88), un deuxième passage (60, 92) pour transporter le gaz jusqu'auxdits premier et deuxième paliers à gaz (45, 47) et un filtre (86) disposé dans l'un desdits premier et deuxième passages (84, 88; 92).

12. Appareil selon la revendication 11, dans lequel lesdits premier et deuxième paliers (45, 47) comprennent: respectivement des première et deuxième parties formant bagues (46, 48), des premier et deuxième éléments formant tourillons (68, 70) reliés auxdits moyens de circulation (36) et montés pour pouvoir tourner à l'intérieur desdites première et deuxième bagues (46, 48) respectivement; une plateforme (32) montée à l'intérieur de ladite enveloppe (30); une première cloison étanche (50), suspendue à ladite plateforme (32) pour supporter ledit premier palier à gaz (45); et une deuxième cloison étanche (52) suspendue à ladite plateforme (32) pour supporter ledit deuxième palier à gaz (47), lesdites première et deuxième cloisons (50, 52) ayant des cavités annulaires (54, 56) qui y sont formées et qui communiquent avec ledit deuxième passage (60), lesdites première et deuxième bagues extérieures (46, 48) ayant chacune une pluralité de trous d'échappement (80, 82) s'étendant radialement et qui y sont formés pour communiquer avec lesdites cavités annulaires (54, 56), lesdites première et deuxième cloisons (50, 52) respectivement, un coussin de gaz provenant desdits moyens d'alimentation étant prévu entre respectivement lesdites bagues extérieures (46, 48) et lesdits tourillons (68, 70).

13. Procédé de fabrication d'un ensemble laser (10) de grande longévité et à décharge électrique transversale, comprenant les opérations suivantes:

    a) mise en place d'une enveloppe (28, 30) pouvant être fermée hermétiquement, ayant des électrodes, un ensemble miroir (35), un ventilateur (36) de circulation de gaz laser, et une pluralité de paliers à gaz (45, 47) destinés à supporter le ventilateur de circulation (36) dans cette enveloppe;

    b) évacuation de l'air de ladite enveloppe (28, 30);

    c) cuisson au four de l'enveloppe (28, 30) pour ôter la pollution de ses parois;

    d) remplissage de ladite enveloppe (28, 30) avec un gaz laser excimère choisi;

    e) fermeture étanche de ladite enveloppe (28, 30) contenant le gaz; et

    f) support du ventilateur de circulation (36) du gaz laser pour qu'il tourne sur un coussin de gaz laser.

14. Procédé selon la revendication 13, dans lequel l'étape (A) comprend de plus la mise en place d'une moitié d'un coupleur magnétique (100, 102) dans ladite enveloppe (30) pour coupler ledit ventilateur de circulation à une source extérieure (108) d'énergie mécanique.

F I G. I

ELECTRODES & PRE-IONIZER

34

28

30

32

24

28

10

35

38

108

2

ELECTRODES
& PRE-IONIZER

28

24

34

32

33

30

36

F I G. 2